# EUROPEAN PATENT APPLICATION

(11) **EP 3 682 984 A1**
(43) Date of publication of application: **22.07.2020**
(21) Application number: 20152313.1
(22) Date of filing: 16.01.2020
(51) Int. Cl.: B22C 9/18, B22D 31/00, F01D 5/18, G05B 19/4097

(54) **METHOD OF MANUFACTURE OF AIRFOIL CASTINGS USING AUTONOMOUS ADAPTIVE MACHINING**

(30) Priority: 18.01.2019 US 201916252286
(71) Applicant: United Technologies Corporation, Farmington, CT 06032 (US)
(72) Inventor: AUXIER, James Tilsley, Bloomfield, CT Connecticut 06002 (US); BARRON, Alan C., Jupiter, FL Florida 33458 (US); BALZER, Wolfgang, Wethersfield, CT Connecticut 06109 (US)
(74) Representative: Dehns

(57) **Abstract**

A method (100) of forming an airfoil (28) includes casting the airfoil (28) with an internal cooling circuit and an exterior surface (30) with a positive feature (32, 34). The exterior surface (30) of the airfoil (28) is scanned with a first probe (20). A size and a location of the positive feature (32, 34) are identified based on the scan of the exterior surface (30). A transformation matrix is created with a controller (12) such that the transformation matrix includes toolpath transformation instructions. A transformed set of machine toolpath instructions is created by applying the transformation matrix using the controller (12) to a first set of machine toolpath instructions to align the first set of machine toolpath instructions relative to the positive feature (32, 34). A contour is then machined into the exterior surface (30) of the airfoil (28) based on the transformed set of machine toolpath instructions.

## Description

### BACKGROUND

The present disclosure generally relates to manufacturing. In particular, the present disclosure relates to manufacturing involving autonomous adaptive machining of cast parts.

The effectiveness and thermal efficiency impact of film cooling holes on turbine airfoils are affected by the relative pressures, relative velocity, and angle of the jet of cooling fluid into the local boundary layer surrounding and downstream of the cooling hole. The relative pressure and velocity profiles of the local boundary layer can be adjusted to be more advantageous for cooling performance and efficiency impact by modifying a shape of the surface locally surrounding a cooling hole. The shape of the surface locally surrounding a cooling hole can also be tailored to prevent flame-holding. Existing investment casting methods used to create near-hole surface contouring on turbine airfoils include inordinately complex wax dies, as the shapes and depths of the contours can contribute to back-locking.

### SUMMARY

In accordance with a first aspect of the disclosure, a method of forming an airfoil includes casting the airfoil with an internal cooling circuit and an exterior surface with a positive feature. The exterior surface of the airfoil is scanned with a first probe. A size and a location of the positive feature are identified based on the scan of the exterior surface. A transformation matrix is created with a controller such that the transformation matrix includes toolpath transformation instructions. A transformed set of machine toolpath instructions is created by applying the transformation matrix using the controller to a first set of machine toolpath instructions to align the first set of machine toolpath instructions relative to the positive feature. A contour is then machined into the exterior surface of the airfoil based on the transformed set of machine toolpath instructions.

In accordance with a second aspect of the disclosure, an airfoil manufacture system includes a computer numerical control machine, a three-dimensional scanning system, and a controller. The computer numerical control machine is configured to machine a contour into a surface of the airfoil. The three-dimensional scanning system includes a first scanning probe disposed to produce sensor signals in response to scanning a surface of the airfoil with the first scanning probe. The controller is electrically connected to the computer numerical control machine and to the three-dimensional scanning system. The controller controls operation of the computer numerical control machine and the three-dimensional scanning system. The controller includes a processor and a geometry engine. A transformation matrix is created based on data from the probe. The transformation matrix is applied to a first set of machine toolpath instructions. A transformed set of machine toolpath instructions is created. The transformed set of machine toolpath instructions is delivered to the computer numerical control machine.

The present summary is provided only by way of example, and not limitation. Other aspects of the present disclosure will be appreciated in view of the entirety of the present disclosure, including the entire text, claims, and accompanying figures.

### BRIEF DESCRIPTION OF THE DRAWINGS

FIG. 1 is a schematic block diagram illustrating a manufacturing system for airfoils having complex geometries.
FIG. 2 is a perspective view of an airfoil with a row of near-hole surface-contoured shaped cooling holes.
FIG. 3 is a flowchart of a method of forming near-hole surface contours in the airfoil.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings.

### DETAILED DESCRIPTION

This disclosure includes an autonomous adaptive machining manufacturing method for use with a computer numerical control ("CNC") machine. A cast workpiece is probed (e.g., optical, tactile, etc.), and a transformation matrix based upon the probe data is applied to nominal CNC toolpaths to adjust for the actual alignment of casting features to be machined, thereby reducing cycle time obviating any need for full three-dimensional ("3D") scanning and computer aided manufacturing toolpath computation for each casting.

In one non-limiting embodiment, the cast workpiece includes a cast airfoil as a rough cast taken at the end of "lost wax" casting operations employing surface contouring. The cast airfoil includes a blade which extends from a platform and a base relatively beneath the platform. In this example, a near-hole shaping profile of the blade surface can include features such as peaks and valleys surrounding areas of the blade near cooling holes positioned in the blade surface.

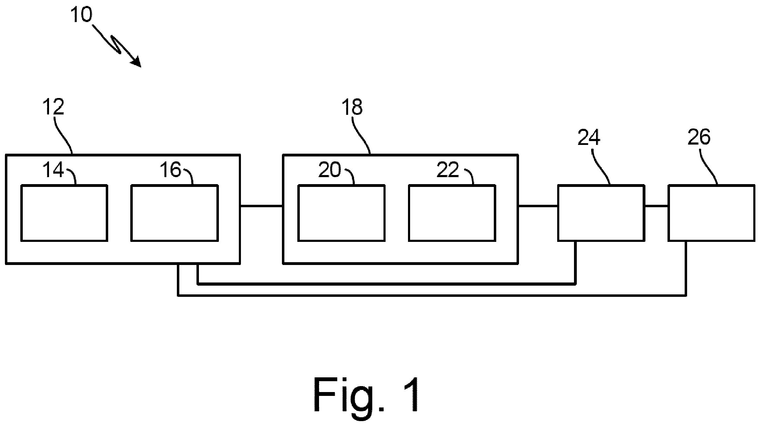

FIG. 1 shows a schematic view of system 10, and includes controller 12 (with processor 14 and geometry engine 16), 3D scanning system 18 (with first scanning probe 20 and second scanning probe 22), CNC machine 24, and coater 26.

In this and similar embodiments, system 10 includes 3D scanning system 18, CNC machine 24 with controller 12. 3D scanning system 18 and/or CNC machine 24 can further include a matching engine, a conformal-mapping engine, a tool operations engine, and a database. Any of these components can be outsources and/or be in communication with controller 12 via a network. System 10 is computer-based, and can include one or more of processor 14, geometry engine 16, a tangible non-transitory computer-readable memory, and/or a network interface, along with other suitable system software and hardware components. Instructions stored on the tangible non-transitory memory allows system 10 to perform various functions, as described herein.

In this non-limiting embodiment, controller 12 is configured as a network element or hub to access various systems, engines, and components of system 10. Controller 12 can include a network, geometry engine, computer-based system, and/or software components configured to provide an access point to various systems, engines, and components of system 10. Controller 12 CNC machine 24 is in operative and/or electronic communication with a matching engine, conformal-mapping engine, tool operations engine, and/or the database of either 3D scanning system 18 or CNC machine 24.

In the illustrated embodiment, 3D scanning system 18 can include hardware and/or software configured to create a 3D scan of a work piece such as the cast airfoil. 3D scanning system 18 can include for example, first scanning probe 20, second scanning probe 22, a coordinate measuring machine, a contact probe, a structured light scanner (e.g., blue light, white light, etc.), a modulated light scanner, a laser scanner, acoustic sensor, thermal sensors, and/or the like. 3D scanning system 18 is configured to communicate with CNC machine 24 and to generate and transmit scan data, such as a point cloud, to controller 12.

Additionally in this embodiment, CNC machine 24 can include hardware and/or software configured to perform additive or subtractive manufacturing operations on a work piece such as the cast airfoil in response to instructions from 3D scanning system 18. CNC machine 24 is configured to communicate with 3D scanning system 18 and receive tool instructions from 3D scanning system 18. CNC machine 24 can, for example, include a grinding machine, a lathe, a milling machine, an electron beam welding machine, a layer-by-layer additive manufacturing device, an electrical discharge manufacturing machine, and/or the like. In this embodiment, a tool instruction can include data such as instructions for CNC toolpaths, G-codes, M-codes, layered additive programs, and/or the like.

Further in this non-limiting embodiment, the database can include any number of data elements or data structures such as model data, match data, and features data. The database is configured to store data using any suitable technique described herein or known in the art. The database is configured to store digital models and data related to digital models of a work piece as model data. Model data can include data such as accurate dimensional data, point clouds, an ideal airfoil model, a nominal airfoil model, and a conformal-mapped nominal airfoil model, or a difference map. Features data can include data related to dimensional abnormalities of a work piece such as dimensional data, an index of features comprising a positive feature set and a negative feature set, or tool instructions.

Additional description and explanation of the above embodiments can be found in commonly owned U.S. Application No. 16/185,378 titled "METHOD OF MANUFACTURE USING AUTONOMOUS ADAPTIVE MACHINING".

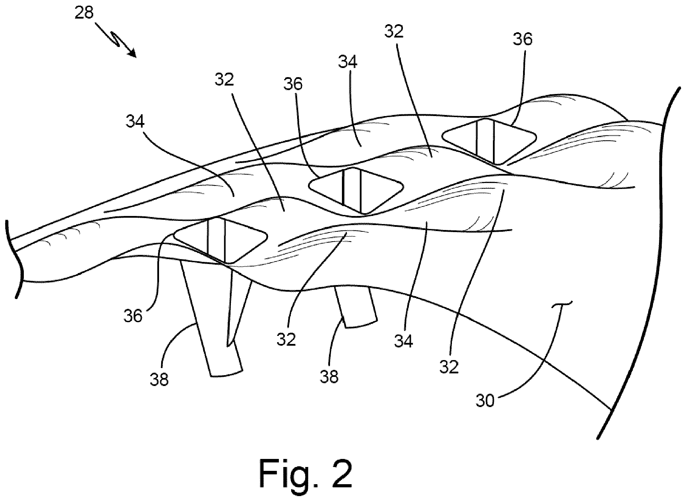

FIG. 2 is a perspective view of airfoil 28 and shows surface 30, peaks 32, valleys 34, holes 36, and meters 38.

In this example, airfoil 28 can be an airfoil, a blade, or a vane of a gas turbine engine. In FIG. 2, airfoil 28 is shown with its internal solid material shown as omitted from airfoil 28, and shows surface 30 along with meters 38. This view is provided with the internal solid material of airfoil 28 omitted for clarity so as to better view meters 38 and their relationship to the other features of airfoil 28. Surface 30 is an exterior layer or outer face of airfoil 28. Peaks 32 are bumps or protrusions extending outwards from surface 30 of airfoil 28. Valleys 34 are depressions, indentations, or dimples extending into surface 30 of airfoil 28. Holes 36 are openings or cut-outs in surface 30. Meters 38 are fluidic channels or passages.

In this non-limiting embodiment, airfoil 28 is connected to a stationary or rotating hub of a gas turbine engine of an aircraft (not shown). Surface 30 extends around an external boundary of airfoil 28. Peaks 32 and valleys 34 are disposed into portions of surface 30 of airfoil 28. In this non-limiting embodiment, peaks 32 can extend from surface 30 from 0 to 0.010 inches (0 to 0.254 millimeters). Likewise, valleys 34 can depress into surface 30 from 0 to 0.010 inches (0 to 0.254 millimeters). Holes 36 are disposed along portions of surface 30 and are shown as forming a row in this example. Holes 36 are in fluid communication with meters 38. In this example, holes 36 are shown as disposed in valleys 34 between adjacent peaks 32. In other non-limiting embodiments, holes 36 can be disposed in or partially in any of peaks 32 and/or valleys 34 shown in FIG. 2. Meters 38 are formed in or cut into internal portions of airfoil 28. Meters 38 are fluidly connected to holes 36.

Peaks 32 and valleys 34 of surface 30 provide near-cooling hole contouring to increase a thermal efficiency impact of holes 36. Peaks 32 and valleys 34 affect relative pressures, relative velocity, and angle of jets of cooling fluid that exit out of holes 36. Likewise, the configuration, pattern, and/or shapes of peaks 32 and valleys 34 can be tailored and/or modified to be more advantageous for cooling performance and efficiency, as well as to prevent flame-holding. Holes 36 output cooling fluid from within airfoil 28 (e.g., from an internal cooling circuit) to surface 30 so as to provide film cooling for airfoil 28. Meters 38 fluidly connect holes 36 to the internal cooling air circuit within airfoil 28 and deliver the cooling fluid to holes 36 so the cooling fluid can be dispensed out of holes 36 and flow across surface 30 of airfoil 28.

With existing methods, peaks and valleys of in airfoil surfaces are created during an investment casting process incorporating a complex wax die due to the shapes and depths of the contours that can contribute to the issue of back-locking.

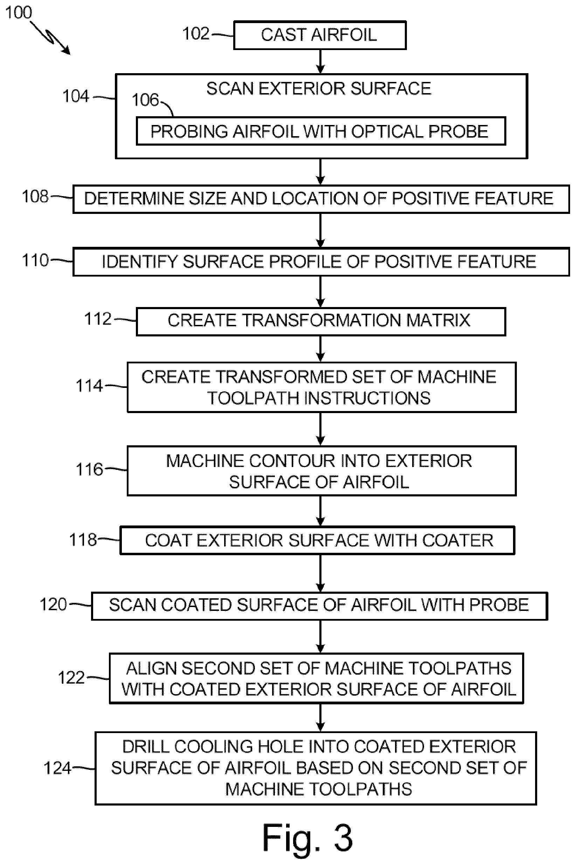

FIG. 3 is a flowchart of method 100 of forming near-hole surface contours (e.g., peaks 32 and valleys 34) in airfoil 28. Method 100 includes steps 102 through 124.

Step 102 includes casting airfoil 28, to include an internal cooling circuit and surface 30 with a positive feature or features. In this example, the positive features can include surface contouring of peaks 32 and valleys 34 disposed around and near holes 36. Step 104 includes scanning surface 30 of airfoil 28 with a first probe (e.g., first scanning probe 20). The probe includes a tactile, optical (e.g., blue light or structured light), computed tomography, X-ray (e.g., computed tomography), or infrared probe. For example, X-ray or infrared spectra can be used to probe and/or measure an actual condition of airfoil 28. Computed tomography (e.g., computerized axial tomography) can also be used and offers advantages in determining the best finishing toolpaths based on an internal core position of airfoil 28. Similarly, infrared thermal imaging can determine how to finish a part based on as-cast conditions compared to desired cooling characteristics. Step 104 also includes step 106 of probing airfoil 28 with an optical probe. Step 104 involves reading surface 30 to create a digital representation of surface 30 and from that digital representation to determine the exact locations and dimensions of peaks 32 and valleys 34.

Step 108 includes determining a size and a location of the positive features (e.g., contouring of peaks 32 and valleys 34) based on the scan or probe data of surface 30 from step 104. Here, the scan or probe data from step 104 is imported into geometry engine 16 of controller 12 to compare the scan or probe data to nominal location information from a nominal model of a surface of airfoil 28. In this non-limiting embodiment, the controller (e.g., controller 12) can be either a software program or a piece of hardware with an operating software program. In this example, geometry engine 16 executes an automated process of comparing the nominal model of airfoil 28 to the digital representation of surface 30 as measured from the as-cast condition of surface 30. From this comparison between the nominal model of airfoil 28 and the digital representation of surface 30, geometric differences between the two are then used as inputs in creating a transformation matrix for use in step 112.

Step 110 includes identifying a surface profile of the positive feature(s) (e.g., contouring of peaks 32 and valleys 34) based on the determined size and location of the positive feature. The surface profile of the positive feature(s) is determined by geometry engine 16 of the controller. Step 112 includes creating the transformation matrix with a controller and such that the transformation matrix can include toolpath transformation instructions that include a series of entries as instructions for transforming a nominal toolpath to account for dimensional differences between a nominal model of airfoil 28 and cast airfoil 28 as-built. The series of entries in the transformation matrix is based on the probe data from step 104 and represents changes to the nominal toolpath needed to adjust for the differences between the nominal net state and actual measurements of cast airfoil 28 as recorded in the probe data.

Step 114 includes creating a transformed set of machine toolpath instructions by applying the transformation matrix using the controller to a first set of machine toolpath instructions to align the first set of machine toolpath instructions relative to the positive feature(s) (e.g., contouring of peaks 32 and valleys 34). Step 116 includes machining a contour into surface 30 of airfoil 28 based on the transformed set of machine toolpath instructions. Step 118 includes coating, with coater 26, surface 30 of airfoil 28. In this non-limiting embodiment, the coating can include a metallic based or ceramic thermal barrier coating.

Step 120 includes scanning, with a second probe (e.g., second scanning probe 22), coated surface 30 of airfoil 28. Here, the second probe can be first scanning probe 20 or a different probe than first scanning probe 20. In step 120, the second probe is measuring a thickness of the coating applied to surface 30 as well as identifying any variations in a depth, thickness, etc. of the coating. Step 122 includes aligning a second set of machine toolpaths with coated surface 30 of airfoil 28. Here, the second set of machine toolpaths can be aligned as per either the first set of probe data from step 104 or the second set of probe data from step 120. Step 124 includes drilling a cooling hole into coated surface 30 of airfoil 28 based on the second set of machine toolpaths.

Benefits of method 100 include more accurate and consistent placement of cooling holes at design-intent locations. Method 100 provides the ability to contour the surface immediately surrounding a cooling hole (e.g., hole 36), which achieves significant improvements in cooling effectiveness and thermal efficiency. Method 100 is further adaptable to drilling of coated holes after a ceramic coating is applied to airfoil 28, which helps to avoid coat-down and further impart an optimal diffuser shape. Moreover, the cooling effectiveness benefits provided by method 100 translates into fewer cooling holes 36 per airfoil 28 thereby reducing time and costs during manufacturing. In addition, the complexity of internal cooling circuits can be reduced with greater external cooling effectiveness, thereby additionally reducing part cost, weight, etc.

### Discussion of Possible Embodiments

A method of forming an airfoil includes casting the airfoil with an internal cooling circuit and an exterior surface with a positive feature. The exterior surface of the airfoil is scanned with a first probe. A size and a location of the positive feature are identified based on the scan of the exterior surface. A transformation matrix is created with a controller such that the transformation matrix includes toolpath transformation instructions. A transformed set of machine toolpath instructions is created by applying the transformation matrix using the controller to a first set of machine toolpath instructions to align the first set of machine toolpath instructions relative to the positive feature. A contour is then machined into the exterior surface of the airfoil based on the transformed set of machine toolpath instructions.

The method of the preceding paragraph can optionally include, additionally and/or alternatively, any one or more of the following steps, features, configurations and/or additional components.

An exterior surface of the airfoil can be coated with a coater, the coated exterior surface of the airfoil can be with a second probe, a second set of machine toolpaths can be aligned with the coated exterior surface of the airfoil, and/or a cooling hole can be drilled into the coated exterior surface of the airfoil based on the second set of machine toolpaths.

The airfoil can be probed with an optical probe.

The transformation matrix can comprises a series of entries as instructions for transforming a nominal toolpath to account for dimensional differences between a nominal model of the airfoil and the cast airfoil as-built.

The series of entries in the transformation matrix can be based on probe data.

The series of entries can represent changes to the nominal toolpath needed to adjust for the differences between the nominal net state and actual measurements of the cast workpiece as recorded in the probe data.

The probe data can be imported into the controller, and/or the probe data can be compared to nominal location information from a nominal model of the exterior surface of the airfoil, wherein the probe data can be compared with a geometry engine of the controller.

A digital representation of the surface of the airfoil can be created before the step of determining a size and a location of the positive feature.

The surface profile of the positive feature can be identified by a geometry engine of the controller.

An airfoil manufacture system includes a computer numerical control machine, a three-dimensional scanning system, and a controller. The computer numerical control machine is configured to machine a contour into a surface of the airfoil. The three-dimensional scanning system includes a first scanning probe disposed to produce sensor signals in response to scanning a surface of the airfoil with the first scanning probe. The controller is electrically connected to the computer numerical control machine and to the three-dimensional scanning system. The controller controls operation of the computer numerical control machine and the three-dimensional scanning system. The controller includes a processor and a geometry engine. A transformation matrix is created based on data from the probe. The transformation matrix is applied to a first set of machine toolpath instructions. A transformed set of machine toolpath instructions is created. The transformed set of machine toolpath instructions is delivered to the computer numerical control machine.

The system of the preceding paragraph can optionally include, additionally and/or alternatively, any one or more of the following features, configurations and/or additional components.

A coater can be configured to coat the airfoil.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method (100) of forming an airfoil (28), the method (100) comprising:
casting the airfoil (28) with an internal cooling circuit and an exterior surface (30) having a positive feature (32, 34);
scanning the exterior surface (30) of the airfoil (28) with a first probe (20);
determining a size and a location of the positive feature (32, 34) based on the scan of the exterior surface (30);
identifying a surface profile of the positive feature (32, 34) based on the determined size and location of the positive feature (32, 34);
creating a transformation matrix with a controller (12), wherein the transformation matrix comprises toolpath transformation instructions;
creating a transformed set of machine toolpath instructions by applying the transformation matrix using the controller (12) to a first set of machine toolpath instructions to align the first set of machine toolpath instructions relative to the positive feature (32, 34); and
machining a contour into the exterior surface (30) of the airfoil (28) based on the transformed set of machine toolpath instructions.

2. The method of claim 1, further comprising:
coating the exterior surface (30) of the airfoil (28) with a coater (26);
scanning the coated exterior surface (30) of the airfoil (28) with a second probe (22);
aligning a second set of machine toolpaths with the coated exterior surface (30) of the airfoil (28); and
drilling a cooling hole (36) into the coated exterior surface (30) of the airfoil (28) based on the second set of machine toolpaths.

3. The method of claim 1 or 2, wherein scanning the exterior surface (30) of the airfoil (28) comprises probing the airfoil (28) with an optical probe.

4. The method of any preceding claim, wherein the transformation matrix comprises a series of entries as instructions for transforming a nominal toolpath to account for dimensional differences between a nominal model of the airfoil (28) and the cast airfoil (28) as-built.

5. The method of claim 4, wherein the series of entries in the transformation matrix is based on probe data.

6. The method of claim 4 or 5, wherein the series of entries represents changes to the nominal toolpath needed to adjust for the differences between the nominal net state and actual measurements of the cast airfoil (28) as recorded in the probe data.

7. The method of any preceding claim, wherein determining a size and a location of the positive feature (32, 34) further comprises:
importing the probe data into the controller (12); and
comparing the probe data to nominal location information from a nominal model of the exterior surface (30) of the airfoil (28), wherein the probe data is compared with a geometry engine (16) of the controller (12).

8. The method of any preceding claim, further comprising creating a digital representation of the exterior surface (30) of the airfoil (28) before the step of determining a size and a location of the positive feature (32, 34).

9. The method of any preceding claim, wherein the surface profile of the positive feature (32, 34) is identified by a geometry engine (16) of the controller (12).

10. An airfoil manufacture system (10), the system (10) comprising:
a computer numerical control machine (24) configured to machine a contour into a surface (30) of the airfoil (28);
a three-dimensional scanning system (18) with a first scanning probe (20), wherein the first scanning probe (20) is disposed to produce sensor signals in response to scanning a surface (30) of the airfoil (28) with the first scanning probe (20); and
a controller (12) electrically connected to the computer numerical control machine (24) and to the three-dimensional scanning system (18), wherein the controller (12) controls operation of the computer numerical control machine (24) and the three-dimensional scanning system (18), wherein the controller (12) comprises:
a processor (14); and
a geometry engine (16), wherein at least one of the processor (14) and the geometry engine (16) are configured to:
create a transformation matrix based on data from the probe (20);
apply the transformation matrix to a first set of machine toolpath instructions;
create a transformed set of machine toolpath instructions; and
deliver the transformed set of machine toolpath instructions to the computer numerical control machine (24).

11. The airfoil manufacture system of claim 10, further comprising a coater (26) configured to coat the airfoil (28).
